**Europäisches Patentamt**

**European Patent Office**

**Office européen des brevets**

(19)

(11) Veröffentlichungsnummer: **0 121 766**
**B1**

(12) # EUROPÄISCHE PATENTSCHRIFT

(45) Veröffentlichungstag der Patentschrift:
04.01.89

(51) Int. Cl.⁴: **G 01 S 7/52, G 01 S 7/62**

(21) Anmeldenummer: **84102386.4**

(22) Anmeldetag: **05.03.84**

(54) **Verfahren und Vorrichtung zur Darstellung von Bildinformationen.**

(30) Priorität: **14.03.83 DE 3308994**

(43) Veröffentlichungstag der Anmeldung:
**17.10.84 Patentblatt 84/42**

(45) Bekanntmachung des Hinweises auf die Patenterteilung:
**04.01.89 Patentblatt 89/1**

(84) Benannte Vertragsstaaten:
**AT DE FR GB NL**

(56) Entgegenhaltungen:
**EP-A-0 066 126**
**EP-A-0 067 316**
**DE-A-2 919 776**
**FR-A-2 310 608**
**US-A-4 214 269**
**US-A-4 245 250**
**US-A-4 271 842**
**US-A-4 275 415**

(73) Patentinhaber: **Siemens Aktiengesellschaft Berlin und München, Wittelsbacherplatz 2, D-8000 München 2 (DE)**

(72) Erfinder: **Birk, Adalbert, Kulmbacher Strasse 51, D-8520 Erlangen (DE)**
Erfinder: **Saugeon, Ulrich, Isarstrasse 2, D-8520 Erlangen (DE)**

LIBER, STOCKHOLM 1989

**Beschreibung**

Die Erfindung bezieht sich auf ein Verfahren zur Umwandlung von mit einem Ultraschallscanner, wie z. B. einem Sektorscanner, erhaltenen Ultraschall-Echosignalen in Bildsignale, bei dem jeweils entlang einer jeden Abtastrichtung der von dem verwendeten Scanner erzeugten Scanform eine Vielzahl von Ultraschall-Echowerten erfaßt und als Bildvektor in voller Länge in jeweils einer Spalte eines Bildspeichers mit orthogonaler Speichermatrix zwischengespeichert wird, und bei dem die in den Bildspeicher eingeschriebenen Bildvektoren zur geometrisch der Scanform entsprechenden, fernsehnormgerechten Darstellung auf einem Monitor mit Hilfe einer entweder in einem Speicher enthaltenen oder von einer Recheneinrichtung erzeugten und in einem Speicher abgelegten darstellungsspezifischen Tabelle in Bildsignale umgewandelt werden, durch welche die geometrische Form des Ultraschall-Scans unverzerrt auf dem Monitor rekonstruiert wird. Die Erfindung bezieht sich auch auf eine Vorrichtung zur Durchführung dieses Verfahrens mit einem Ultraschall-Sende- und Empfangs-System zur Durchführung eines Ultraschall-Scans, wie z. B. eines Sektorscans, mit einem aus in Zeilen und Spalten angeordneten Speicherzellen in Form einer orthogonalen Speichermatrix aufgebauten Bildspeicher zur Zwischenspeicherung von Bildvektoren, die jeweils aus den entlang einer Abtastrichtung erhaltenen Abtastwerten der empfangenen Ultraschall-Echosignale gebildet sind, mit einem Speicher, in dem eine für die fernsehnormgerechte Darstellung der verwendeten Scanform spezifische Tabelle abgelegt ist, mit einem Monitor zur unverzerrten Darstellung des Ultraschallscans anhand von dem Monitor zugeführten, fernsehnormgerechten Bildsignalen, die durch Umwandlung der im Bildspeicher abgelegten Bildvektoren mit Hilfe der Tabellenwerte erzeugt werden, und mit einer Steuereinrichtung zur Steuerung des Auslesens des Bildspeichers und des Speichers. Verfahren und Vorrichtung dieser Art sind aus der EP-A-0 067 316 und aus der US-A-4 271 842 bekannt.

Die für die Bildinformation erforderlichen Bildsignale können bei den verschiedenen Ultraschall-Abtastverfahren beispielsweise in Form von parallelen, aber auch von nichtparallelen Bildvektoren, beispielsweise im Sektorformat, anfallen. Sie werden mittels eines Ultraschallkopfes gewonnen, der z. B. nach dem Parallel-Scan-Verfahren, nach dem Sektor-Scan-Verfahren (elektronischer oder mechanischer Sektor-Scan) oder nach dem Trapez-Scan-Verfahren arbeitet.

Beim Ultraschall-Sektor-Scan-Verfahren ist es erwünscht, die hier in Form fächerförmig verlaufender, d. h. nicht-paralleler Bild-Vektoren erzeugte Bildinformation als zusammengehöriges Bild auf dem Bildschirm des Fernsehmonitors geometrisch korrekt wiederzugeben. Als "Bildvektor" wird hierbei die nach Aussenden eines Ultraschallimpulses entlang einer Ultraschallzeile empfangene Echoinformation verstanden. Diese liegt nach entsprechender Verarbeitung digital als "eindimensionaler Vektor" vor. Für verschiedene Abtastzeitpunkte ergeben sich beim Sektor-Scan-Verfahren - ausgehend von einem gemeinsamen Ursprungsort - verschiedene Winkelrichtungen für die Vektoren. Für eine fernsehnormgerechte sogenannte "Real Time"-Wiedergabe ist es dabei notwendig, einen Scan-Konverter mit Zwischenspeicher zu verwenden. Der Zwischenspeicher umfaßt in der Regel einen zweidimensionalen Bildspeicher sowie einen eindimensionalen "Vektorspeicher" zum Einschreiben und einen eindimensionalen "Horizontalspeicher" zum Auslesen, die beide jeweils normalerweise nach dem Wechselpuffer-Prinzip betrieben werden.

In zeitgemäßer Technologie wird üblicherweise mit digitalen Halbleiterspeichern gearbeitet. Aus der US-A-4 245 250 ist ein Scan-Konverter für einen Ultraschall-Sektor-Scanner bekannt, der das Erreichen einer möglichst hohen Bildfrequenz zum Ziel hat. Dabei werden die von dem Sektor-Scanner ("Phased Array") erzeugten Scanlinien mit unterschiedlicher Frequenz abgetastet. Die so entlang einer Abtastzeile akquirierten Ultraschall-Echosignale oder Abtastdaten werden in einen von vier Hauptspeichern eingeschrieben. Vorgeschaltete Verzögerungsglieder wirken als Zwischenspeicher. Jeder der zweidimensional ausgeführten Hauptspeicher ist zur Aufnahme eines Viertels des kompletten Ultraschall-Echobildes eingerichtet. Durch Anwendung der variablen Frequenz bei der Abtastung wird beim Einschreiben in die Hauptspeicher eine "Datenreduktion" vorgenommen.

Aus der bereits genannten EP-A-0 067 316 sind ein Verfahren und eine Vorrichtung bekannt, mit denen sich z. B. die auf medizinischem Gebiet erhaltenen Abtastsignale in Videosignale der Standard-Fernsehnorm umsetzen lassen. Insbesondere können Sektor-Scan-Signale in TV-Signale umgesetzt werden. Dabei werden die Sektor-Scan-Signale in einem Bildspeicher abgespeichert und anschließend wieder über einen Horizontal-Wechselpuffer-Speicher ausgelesen. Bildspeicher und Horizontal-Wechselpuffer-Speicher arbeiten hierbei nach verschiedenen Zeittakten, und bei der Bildrekonstruktion werden nicht alle Daten des Bildspeichers in den Horizontal-Speicher übernommen. Dadurch kann die Qualität des gesamten Bildes nicht erhalten bleiben. Darüber hinaus, und das ist besonders wichtig, läßt sich nicht jede beliebige Norm in ein TV-Signal wandeln, insbesondere ist eine Betriebswahl zwischen verschiedenen Normen (z. B. Linear-, Sektor-, Trapez-Scan) nicht möglich.

Aus der bereits genannten US-A-4 271 842 sind ein Verfahren und eine Vorrichtung bekannt, mit denen insbesondere beim mechanischen Sektor- Scan bei Herzuntersuchungen Profile dargestellt werden können, also beispielsweise Bilder, die nacheinander vor, während oder nach der Diastole sowie vor, während und nach der Systole auftreten. Diese Druckschrift gibt ebenfalls keinen Hinweis darauf, daß und wie mit ein und derselben Vorrichtung verschiedene Scan-Formate gewählt und dargestellt werden können.

Der vorliegenden Erfindung liegt die Aufgabe zugrunde, ein Verfahren der eingangs genannten Art sowie eine zugehörige Vorrichtung anzugeben, mit welchen eine Zwischenspeicherung und Darstellung der Bildvektoren möglich ist, und zwar unabhängig davon, nach welcher Scan-Art die Bildvektoren gewonnen werden. Es soll insbesondere möglich sein, bei Beibehaltung der Datenverarbeitungsprinzipien von einem Scan-Verfahren auf ein anderes umzuschalten.

Diese Aufgabe wird bei dem Verfahren der eingangs genannten Art erfindungsgemäß dadurch gelöst, daß die im Speicher enthaltenen Tabellenwerte als Leseadressen für die Speicherplätze des Bildspeichers verwendet werden, daß der nachfolgend als Adreßspeicher bezeichnete Speicher synchron mit der zeilenweisen Abtastung des Monitors linear ausgelesen wird, und daß die Adressen im Adreßspeicher in einer solchen Reihenfolge zeilenweise abgelegt werden, daß bei der linearen, mit der Abtastung des Monitors synchronisierten Adressierung des Adreßspeichers von den aus dem Adreßspeicher ausgelesenen Tabellenwerten die im Bildspeicher enthaltenen Echowerte in einer für die unverzerrte Darstellung des Scanform erforderlichen Reihenfolge ausgelesen und dabei in die fernsehnormgerechten Bildsignale umgewandelt werden.

Eine Vorrichtung der eingangs genannten Art zur Durchführung des Verfahrens zeichnet sich erfindungsgemäß dadurch aus, daß der Speicher ein dem Bildspeicher zugeordneter Adreßspeicher ist, der die gleiche Speichermatrixgröße wie der Bildspeicher besitzt und als Tabellenwerte den Speicherplätzen des Bildspeichers zugeordnete Adressen enthält, die im Adreßspeicher in einer solchen Reihenfolge zeilenweise abgelegt sind, daß durch eine von der Steuereinrichtung bewirkte lineare und mit der Abtastung des Monitors synchronisierte Adressierung des Adreßspeichers von den aus dem Adreßspeicher ausgelesenen Tabellenwerten die im Bildspeicher enthaltenen Abtastwerte in einer für die unverzerrte Darstellung der Scanform erforderlichen Reihenfolge ausgelesen und dabei in die fernsehnormgerechten Bildsignale umgewandelt werden.

Der Hauptvorteil des beschriebenen Verfahrens gegenüber früheren Vorschlägen besteht in dem einfachen Einschrieben der Bildinformation in die Speichermatrix. Das Einschreiben ist dabei völlig unabhängig vom speziellen geometrischen Bildformat, d. h. es ist von der Scan-Art unabhängig. Neben dem üblicherweise verwendeten Sektor-Bildformat sind beispielsweise auch vollständige Kreissektoren, Rechteckformate oder Trapezformate mit der hier angegebenen Vorrichtung bearbeitbar.

Der Adreßspeicher kann z. B. eine PROM-, ROM- oder eine RAM-Bank sein. Insbesondere letztere hat den Vorteil, daß über eine Recheneinheit (Computer, Prozessor) während der Bildbeobachtung eine weitere Adreßrechnung durchführbar ist. Damit ergibt sich die Möglichkeit, das Bildformat zu ändern und einen Bildausschnitt abzubilden, was bei herkömmlichen Sektorscannern nicht ohne weiteres möglich ist. Auch ergibt sich mit geringem zusätzlichen Aufwand die Möglichkeit, einen Zoom-Vorgang durchzuführen, d. h. eine Verengung und Vergrößerung des dargestellten Bildausschnittes

Weitere Einzelheiten und Vorteile der Erfindung ergeben sich aus der Figurenbeschreibung von Ausführungsbeispielen anhand der Zeichnung in Verbindung mit den Unteransprüchen.

Es zeigen:

Fig. 1 das Prinzip des erfindungsgemäßen Verfahrens für eine Sektorbilddarstellung,

Fig. 2 ein Blockschaltbild der zugehörigen erfindungsgemäßen Vorrichtung,

Fig. 3 einen zu Figur 2 gehörigen Teilausschnitt für die Informationsgenerierung des Adreßspeichers,

Fig. 4 einen Teilausschnitt zu Figur 2 für das gesteuerte Auslesen der Information aus dem Bildspeicher, und

Fig. 5 ein konkretes Beispiel für das Auslesen einer Videozeile aus einem Bildspeicher, in dem die in einem Sektorscan gewonnenen Vektoren gespeichert sind.

In den Figuren sind entsprechende Elemente mit denselben Bezugszeichen versehen.

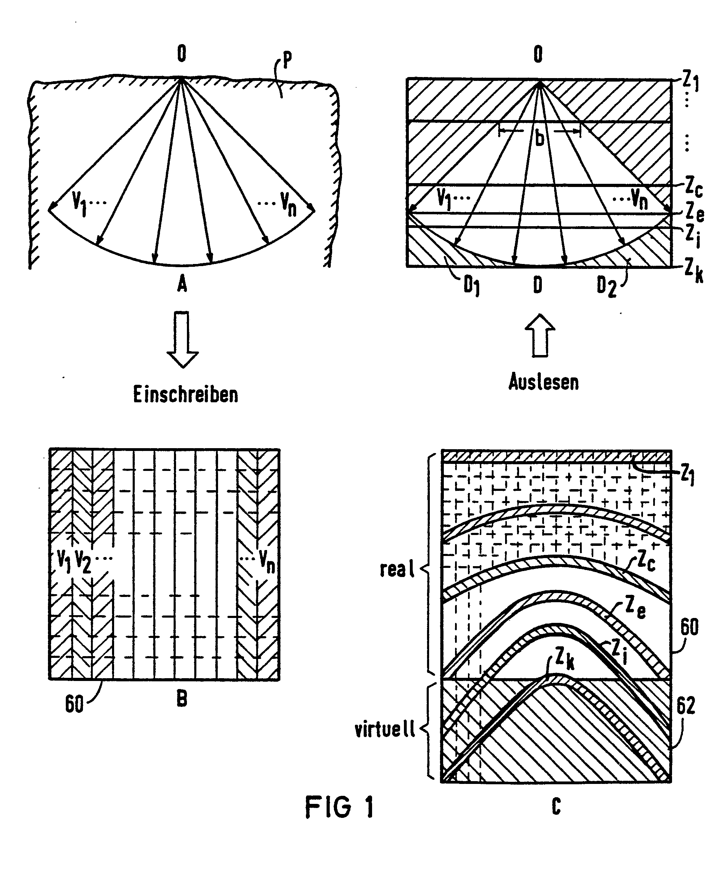

In Figur 1 kennzeichnet Teilbild A einen Sektorscan, der innerhalb eines Objekts P durchgeführt wird, Teilbild B die Speichermatrix eines Bildspeichers 60 beim Einschreiben von Ultraschall-Bildvektoren $V_1$, $V_2$ ... $V_n$, Teilbild C die Speichermatrix des Bildspeichers 60 beim Auslesen von einzelnen Videozeilen $Z_1$, ... $Z_j$ ... $Z_k$ und Teilbild D die Darstellung der ausgelesenen Zeilen $Z_1$ bis $Z_k$ auf einem Fernsehmonitor. Mit $V_1$ bis $V_n$ sind also die Ultraschall-Bildvektoren bezeichnet, die bei der Sektorscanabtastung mit einem mechanischen oder elektronischen Sektorscanner gewonnen werden. Unter dem Begriff "Bildvektor" wird dabei die nach Aussenden eines Ultraschall-Sendeimpulses entlang einer Abtastzeile empfangene Echoinformation verstanden. Solche Bildvektoren werden als eindimensionale Datenkette aufgefaßt. Für verschiedene Abtastzeitpunkte ergeben sich beim Sektor-Scan-Verfahren - ausgehend von einem gemeinsamen Ursprungsort 0 - verschiedene Winkelrichtungen für die einzelnen Vektoren. Im Teilbild A sind diese als strahlenförmiger Fächer dargestellt. Die einzelnen Vektoren $V_1$ ... $V_n$ tragen jeweils die Echointensitätsmodulation als Bildinformation. Wie später noch deutlich wird, wird der strahlenförmige Fächer gemäß Teilbild D auf dem Monitor geometrisch richtig dargestellt. Im Rechteckfeld des Bildschirms sind die nicht von den Ultraschall-Bildvektoren überstrichenen Flächen dunkelgetastet. Sie sind im Teilbild D schraffiert dargestellt.

Das dargestellte Speicherverfahren wird bevorzugt auf medizinischem Gebiet eingesetzt. Es wird im Zusammenhang mit Ultraschall-Echogeräten verwendet, mit denen unterschiedliche Abtastverfahren durchgeführt werden sollen, z. B. in Verbindung mit Linearen Arrays, Curved Arrays, Trapez-Arrays. An dem betreffenden Echogerät kann zwischen den unterschiedlichen Abtastverfahren oder Scan-Arten umgeschaltet werden. Das verwendete Speicherverfahren ist also vom Prinzip her unabhängig von der Scan-Art.

Entsprechend dem vorliegenden Verfahren werden alle bei einer Ultraschalluntersuchung erhaltenen Bildinformationen als parallele, gleich lange Bildvektoren $V_1$ bis $V_n$ in der Matrix des Bildspeichers 60 abgelegt. Dies hat den Vorteil, daß alle aus der Bildinformation akquirierten Daten ohne Datenreduktion gespeichert werden und danach für eine eventuell erforderliche Datenreduktion und/oder eine eventuell gewünschte Bildverarbeitung zur Verfügung stehen.

Um beim Auslesen der Daten für die Videodarstellung das Sektorformat zu rekonstruieren, muß das Auslesen entsprechend einer bestimmten Vorschrift erfolgen. Im Gegensatz zum vorliegenden Verfahren erfolgt das Auslesen üblicherweise horizontal. Zur Verdeutlichung des hier angewandten Verfahrens sind in dem Teilbild C Auslesezeilen $Z_1$ bis $Z_k$ schraffiert eingetragen. Beispielsweise wird mit der Auslesezeile $Z_1$ die Sektorspitze wiedergegeben. Aus dem Teilbild D ist ersichtlich, daß genau in der Sektorspitze die Bildinformation aller Bildvektoren am gleichen Ort dargestellt werden müßte. Dies ist jedoch nicht möglich. Das heißt für das Auslesen, daß hier beim Sektor-Scan-Verfahren eine Datenreduktion vorgenommen werden muß (beim linearen Array ist dies nicht notwendig). Dazu wird z. B. der Inhalt nur einer bestimmten, zuvor ausgewählten Speicherzelle der Auslesezeile $Z_1$ des Bildspeichers 60 ausgelesen und in der Mitte der horizontalen Videozeile $Z_1$ im Teilbild D dargestellt. Dagegen kann auch z. B. der Mittelwert aller Speicherzellen der Auslesezeile $Z_1$ gebildet und dargestellt werden.

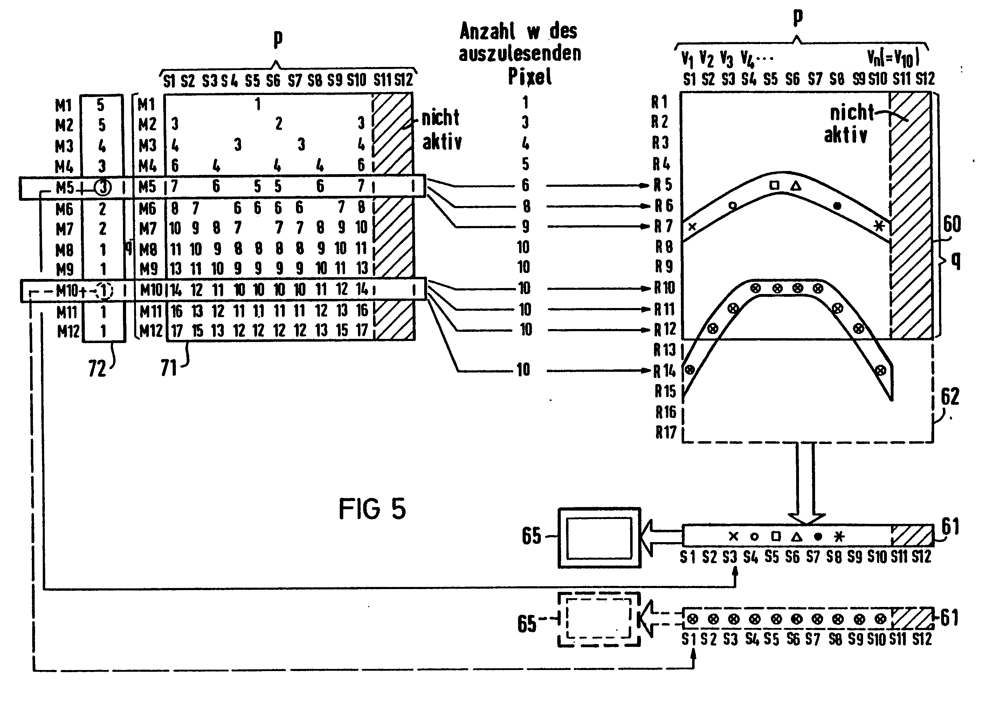

Die weiteren Auslesezeilen $Z_2$ ... $Z_k$ werden so ausgelesen, daß die durch die Parallelspeicherung der Vektoren $V_1$ bis $V_n$ erfolgte Verzerrung des Sektorfeldes wieder rückgängig gemacht wird. Im Ergebnis wird daher das Auslesen der Auslesezeilen $Z_2$ ... $Z_k$ entlang von gekrümmten Linien durchgeführt, wofür eine entsprechende Vorschrift, eine Tabelle, eine Zuordnung o. dgl. in einem zugehörigen Adreßspeicher abgelegt oder gespeichert ist. Ein Beispiel für das Auslesen der im Bildspeicher 60 zwischengespeicherten Bildvektoren $V_1$ ... $V_n$ durch eine zugehörige Adreßsteuerung wird weiter unten anhand der Figur 5 für das Sektorformat beschrieben.

Auch bei dem Auslesen der Auslesezeilen $Z_2$ bis $Z_c$ wird eine Datenreduktion - nach an sich bekannten Prinzipien vorgenommen. Diese Datenreduktion erfolgt ebenfalls aus dem Grunde, daß die Bildschirmzeile $Z_2$ bis $Z_c$ im Darstellungsbereich b des Sektors nicht genügend Platz bietet, um alle vorhandenen Informationen darzustellen.

Aus Teilbild C ist ersichtlich, daß die Auslesezeilen $Z_i$ mit zunehmendem Index i, der von 1 bis k läuft, zunehmend gekrümmt sind. Die Auslesekurve für die "Eckzeile" ist mit $Z_e$ bezeichnet. Sie läuft durch die am weitesten außen liegenden Eckpunkte des Abtastsektors. Aus Teilbild D wird deutlich, daß sie im dargestellten Monitorbild ebenfalls durch die entsprechenden Eckpunkte verläuft. Alle nachfolgenden Auslesezeilen beinhalten beim Ultraschall-Scan nicht erfaßte Objektbereiche, die weiter vom Ursprungsort 0 entfernt liegen als der Länge (= Eindringtiefe) der Ultraschallbild-Vektoren $V_1$ bis $V_n$ entspricht. Die Auslesekurve $Z_i$ beinhaltet beispielsweise nur in ihrem mittleren Bereich Bildinformation, und die Auslesekurve $Z_k$ hat praktisch nur einen einzigen Informationswert in der Mitte.

Es ist also festzuhalten, daß die Daten der in den Bildspeicher 60 eingespeicherten Ultraschall-Bildvektoren $V_1$ bis $V_n$ nicht horizontal, sondern nach zunehmend gekrümmten Auslesezeilen $Z_1$ bis $Z_k$ ausgelesen werden, wodurch eine verzerrungsfreie Bild-Rekonstruktion des abgetasteten Objekts möglich ist.

Im Teilbild C ist unterhalb des "realen" Bildspeichers 60 ein "virtueller Bildspeicher 62" gezeigt. Dieser virtuelle Bildspeicher 62 ist in der Realität als Hardware nicht vorhanden. Das hier beschriebene Verfahren arbeitet jedoch so, als sei er tatsächlich existent. Er ist in der Tat adressierbar und liefert die in den nach rechts schraffierten Bildbereichen D1 und D2 (s. Teilbild D) enthaltenen Schwarzinformationen für den Monitor. Die Anwendung dieses virtuellen Bildspeichers 62 dient der Verfahrensvereinfachung; man kann dann über das gesamte Bild dasselbe Ausleseverfahren anwenden. Die Funktion des virtuellen Bildspeichers 62 wird bei Figur 5 näher erläutert.

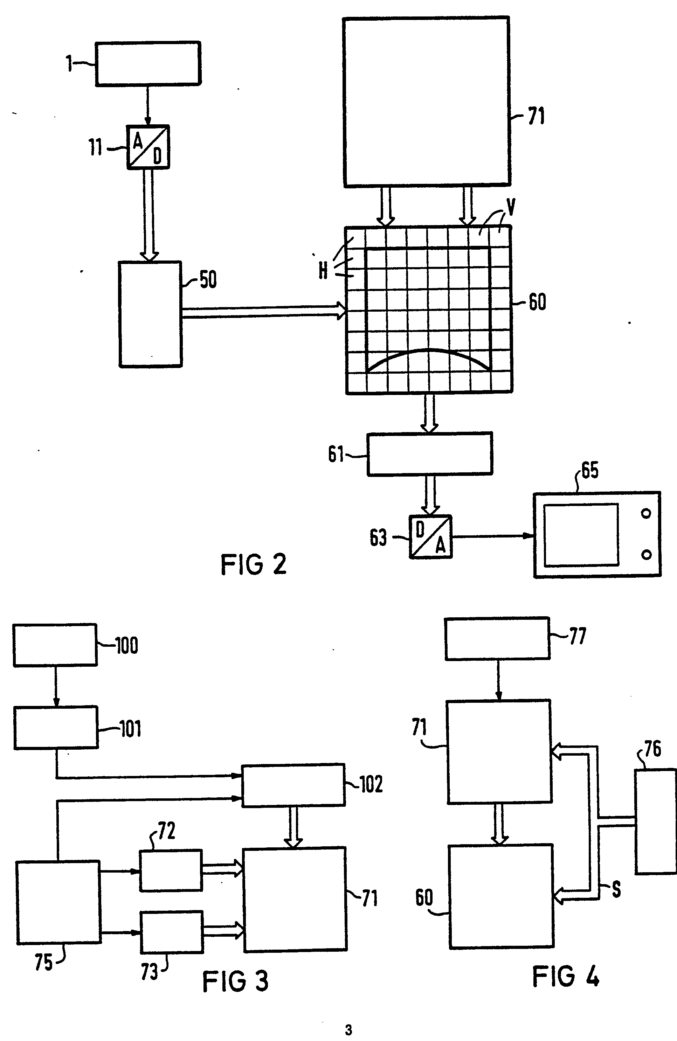

In Figur 2 kennzeichnet 1 ein Ultraschall-Sende/Empfangs-System zur Bildinformationsgewinnung. Dies kann im einzelnen einen mechanischen Sektor-Scanner, einen Compound-Scanner oder eine Anzahl nebeneinander liegender Wandlerelemente in

Form eines linearen Arrays oder aber eines sogenannten "Phased Array" umfassen. Einheiten zur Signal- und Ablaufsteuerung sind in Figur 2 der Einfachheit halber nicht dargestellt. Vom Ultraschall-System 1 gelangen die aufgenommenen Echosignale in Form von Ultraschall-Bildvektoren gemäß der früher gegebenen Definition auf einen Analog/Digital-Wandler 11. Die digitalisierten Bildvektoren werden in einem eindimensionalen Vektorspeicher 50 abgelegt. Dabei werden zweckmäßigerweise jeweils zwei Vektoren nach dem Wechselpufferprinzip gleichzeitig eingeschrieben bzw. ausgelesen.

Die Daten eines jeden Bildvektors werden aus dem Vektorspeicher 50 jeweils nacheinander in den Bildspeicher 60 übertragen. Die einzelnen Vektoren werden dort in parallelen Spalten der Speichermatrix abgespeichert. Dazu besteht der Bildspeicher 60 aus einer kartesischen Speichermatrix mit m Zeilen H und n Spalten V. Die Zahl n kann auch hier wieder die Anzahl der Vektoren pro Bild sein; n kann jedoch auch größer als diese Anzahl sein.

Dem Bildspeicher 60 ist ein zweidimensionaler Adreßspeicher 71 zugeordnet, der die gleiche Matrixstruktur wie der Bildspeicher 60 aufweist und der die darstellungsspezifische Information (Tabelle, Vorschrift, Zuordnung) beinhaltet. Die zum Adreßspeicher 71 zugehörigen Einheiten zur Gewinnung der Adreßdaten, z. B. ein programmierbarer Computer sowie die Ablaufsteuerung für das Aulislesen der Daten aus dem Bildspeicher 60, sind in Figur 2 ebenfalls nicht dargestellt. Ihre Funktion wird jedoch anhand der nachfolgenden Figuren näher erläutert. Diese Ablaufsteuerung in Verbindung mit dem Adreßspeicher 71 sorgt u.a. für das Auslesen der im Bildspeicher 60 gespeicherten Daten entlang der gekrümmten Auslesezeilen $Z_1$ bis $Z_k$, wie das bei Figur 1 erläutert wurde.

Dem Bildspeicher 60 ist ein üblicher eindimensionaler Horizontalspeicher 61 nachgeschaltet. Er hat die Funktion eines Videozeilenspeichers. Die Steuereinheiten sind hier nicht dargestellt. Vom Horizontalspeicher 61 gelangen die Daten auf einen Digital/Analog-Wandler 63 und von dort als Helligkeitssteuersignal oder Bildinformation auf einen Fernsehmonitor 65. Der Horizontalspeicher 61 arbeitet ebenfalls bevorzugt im Wechselpufferbetrieb.

Für das beschriebene Verfahren ist der Adreßspeicher 71 mit zugehöriger Adreßsteuereinheit und gegebenenfalls zugeordneter Recheneinheit zur Vorgabe der Tabelle, Vorschrift oder Zuordnung wesentlich. Diese Recheneinheit sorgt dafür, daß die Adreßinformationen für das formatgerechte Auslesen der parallel abgespeicherten Bildvektoren $V_1$ bis $V_k$ generiert und in den Adreßspeicher 71 eingeschrieben werden. Diese Recheneinheit kann entfallen, wenn der Adreßspeicher 71 durch einen programmierten Festwertspeicher, z. B. ein PROM oder ROM, gebildet wird, der die gewünschten Adreßinformationen bereits enthält.

In Figur 3 stellt 71 einen Adreßspeicher dar, dem eine Einheit 72 für das Adressieren der Spaltenadressen und eine Einheit 73 für das Adressieren der Zeilenadressen zugeordnet ist. Der Block 75 kennzeichnet eine Einheit für die Ablaufsteuerung, die auf die Spalten- und die Zeilenadresseneinheit 72 bzw. 73 einwirkt. Außerdem wird von der Steuereinheit 75 eine Recheneinheit 102 für den Adressenspeicher 71 angesteuert. Die Recheneinheit 102 kann z. B. ein systeminterner Prozessor oder auch der erwähnte externe Computer sein. Eine Einheit 101 dient zur Auswahl einer Rechenvorschrift für die Generierung der Zuordnung, Tabelle, o. dgl., die im Adreßspeicher 71 abgespeichert werden soll. Diese Einheit 101 kann somit ein Unterprogramm für die Recheneinheit 102 enthalten. Ein Einstellorgan 100 dient zur Auswahl des Unterprogramms und damit zur Wahl der Betriebsart Sektorscan, Parallelscan, Trapezscan, etc. Am Einstellorgan 100 kann zwischen den verschiedenen Betriebsarten umgeschaltet werden, wozu jeweils ein entsprechender Ultraschallkopf zur Verfügung steht.

Mit der in Figur 3 gezeigten Anordnung wird also die Information für den Adressenspeicher 71 generiert. Alternativ kann dies - wie oben erwähnt - durch eine spezielle Adreßrecheneinheit oder durch Abarbeitung eines vorgegebenen Algorithmus erfolgen. Als Ergebnis enthält der Adressenspeicher 71 eine Information, die das formatgerechte Auslesen des Bildspeichers 60 gewährleistet.

Der Adressenspeicher 71 ist in gleicher Matrixformation wie der Bildspeicher 60 ausgebildet. Er wird insbesondere, wie dargelegt, durch eine PROM-, ROM- oder RAM-Bank gebildet und beinhaltet die für das Auslesen des Bildspeichers 60 notwendige darstellungsspezifische Information (Tabelle, Zuordnung, etc.).

Aus Figur 4 ist der Informationsfluß vom Adressenspeicher 71 zum Bildspeicher 60 für den Auslesefall dargestellt. Der Adreßspeicher 71 wird hier von einer Ansteuereinheit 77 fur die Zeilenadressen angesteuert. Der Inhalt des Adreßspeichers 71 beinhaltet hier nur die Zeilenadressen für den Bildspeicher 60, also die Adressen innerhalb einer Spalte des Bildspeichers 60. Diese Zeilenadreßinformation gelangt zum Bildspeicher 60. Sowohl der Adreßspeicher 71 als auch der Bildspeicher 60 werden von einer Ansteuereinheit 76 für die Adresse der auszulesenden Spalte angesteuert. Dieses in Figur 4 dargestellte Verfahren bewirkt eine Umkodierung der darzustellenden Fernsehzeilen in die gekrümmten Auslesezeilen des Bildspeichers 60. Die von der Rastersteuerung 76, 77 an den Adreßspeicher 71 abgegebene Adresse wird dabei umkodiert in der Weise, daß die an der vorgegebenen Zeilenadresse und Spaltenadresse im Adreßspeicher 71 aufgefundene Information als Zeilenadresse für den Bildspeicher 60 verwendet wird. Da die Spaltenadressen für den Adreßspeicher 71 und den Bildspeicher 60 identisch sind und beiden gleichzeitig zugeführt werden, ist nicht nur die Spaltenadresse, sondern auch die gesuchte Zeilenadresse für den Bildspeicher 60 bestimmt. Von dem hierdurch vorgegebenen Speicherplatz kann nun die gespeicherte Information ausgelesen und zur Darstellung gebracht werden.

Über die Adreßrechnung ist ein beliebig vorgegebenes Bildformat (Parallelscan, Sektorscan, etc.) generierbar. Neben der Wiedergabe des normalerweise abgetasteten Sektorfeldes kann während der Bildbeobachtung durch eine weitere Adreßberechnung das dargestellte Bild in seiner Dimension, insbesondere beim Sektorscan, modifiziert werden. Es können also beliebig auswählbare Bildausschnitte dargestellt werden, z. B. ein Ausschnitt an einer beliebigen Stelle in einer entsprechenden Vergrößerung.

Es ist auf diese Weise auch ein Zoomen des Bildes möglich.

Es ist also festzuhalten, daß das in den Figuren 1 bis 4 dargestellte Speicher- und Ausleseverfahren anwendbar ist auf verschiedene Scan-Arten, also z. B. auf den Sektor-Scan, linearen Scan, etc. Der Übergang von einer Scan-Art zur anderen erfordert an ein und demselben Gerät lediglich eine softwaremäßige Umstellung, z. B. ein Anrufen eines anderen Unterprogrammes in der Auswahleinheit 101, was dazu führt, daß die Recheneinheit 102 eine neue Zuordnung (Tabelle, etc.) im Adreßspeicher 71 ablegt. Ist im Adreßspeicher 71 eine neue Zuordnung (Tabelle, etc.) abgelegt, ändert sich nichts am Ausleseverfahren aus diesem Adreßspeicher 71. Es wird lediglich mit Hilfe der neuen Zuordnung (Tabelle, etc.) der Bildspeicher 60 in anderer Weise ausgelesen, und zwar z. B. beim Sektor-Scan nach den gekrümmten Auslesezeilen $Z_1$ bis $Z_k$ (Fig. 1C) und z. B. beim linearen Scan nach (nicht gezeigten) horizontalen Auslesezeilen. Es ist somit zu betonen, daß für alle möglichen Scan-Arten dieselbe Verarbeitungs-Hardware Verwendung findet.

Nach einer nicht gezeigten Modifikation kann der Bildspeicher 60 selbst als Wechselpuffer-Speicher arbeiten, wodurch der Vektorspeicher 50 und der Horizontalspeicher 61 entfallen. In dieser Modifikation kann auch der virtuelle Speicher 62 entfallen.

Anhand der Figur 5 ergibt sich beispielhaft das Auslesen der Information aus dem Bildspeicher 60:

In Figur 5 sind der Bildspeicher 60 und der Adreßspeicher 71 als Matrizen mit p x q Speicherplätzen dargestellt.

Zur Erläuterung des Ausleseverfahrens ist ein stark vereinfachtes Beispiel gewählt: Es wird von einem Sektor, der aus einem ersten Halbsektor mit fünf Vektoren $V_1$, $V_2$, $V_3$, $V_4$, $V_5$ und einem zweiten Halbsektor mit ebenfalls fünf Vektoren $V_6$, $V_7$, ..., $V_n = V_{10}$ besteht, und einem Halb-Sektorwinkel von $\alpha = 45°$ ausgegangen. Jeder Vektor $V_1$ bis $V_{10}$ ist in Form von q = 12 Pixeln, die digitalisierten Echosignalen entsprechen, im Bildspeicher 60 eingespeichert. Die Speichermatrix des Bildspeichers 60 und des Adreßspeichers 71 besteht im Beispiel aus je 12 x 12 Speicherplätzen (p = q), wobei bei den vorausgesetzen 10 Vektoren jeweils ein aktiver Teil von 12 x 10 Speicherplätzen Verwendung findet.

Im Bildspeicher 60 sind also zehn Bildvektoren $V_1$ bis $V_{10}$ zu je 12 Pixeln parallel nebeneinander abgespeichert. Es wird weiterhin ein virtueller Speicher 62 für die Erzeugung von Schwarzpixeln verwendet, dessen Funktion noch erläutert wird.

In der vereinfachten Darstellung sind die Spalten- oder Horizontaladressen beider Speicher 60, 71 mit S1 bis S10 bezeichnet. Die Vertikaladressen haben die Bezeichnungen M1 bis M12 im Adreßspeicher 71, R1 bis R12 im Bildspeicher 60 sowie R13 bis R17 im virtuellen Speicher 62. Dargestellt ist weiterhin ein eindimensionaler Startadressenspeicher 72 mit 4 Adressen M1 bis M12 sowie ein eindimensionaler Horizontalspeicher 61 mit p = 12 Adressen S1 bis S12, von denen gemäß der Vektoranzahl nur 10 aktiv sind. Der Horizontalspeicher 61 ist, wenngleich nur einmal vorhanden, noch ein zweites Mal als gestrichelter Kasten dargestellt, um später einen weiteren Auslesevorgang beschreiben zu können.

Die Auslesevorschrift für das Auslesen ist spezifisch für die jeweilige Scan-Art und, wie voranstehend dargelegt, festgelegt. Eine solche Auslesevorschrift (Tabelle, Zuordnung, etc.) ist im Adreßspeicher 71 in Figur 5 als Zahlenbeispiel dargestellt. Folgende Schritte wurden zuvor bei der Erzeugung der Auslesevorschrift z. B. mittels eines Computers im einzelnen durchgeführt:

a) Berechnung der im Startadressenspeicher 72 abzulegenden Startadressen sowie der Anzahl w der aus dem Bildspeicher 60 auszulesenden Pixel,

b) Auswahl der aus dem Bildspeicher 60 auszulesenden Pixel und

c) Berechnung der jeweiligen Vertikaladressen R1 bis R17 der ausgewählten Pixel.

Obige Schritte a) bis c) werden spezifisch für die gewählte Scan-Art durchgeführt, so daß sie nur einmal für diese Scan-Art durchgeführt werden müssen, sobald diese am Einstellorgan 100 aufgerufen wurde. Daran anschließend läuft die eigentliche Ausleseprozedur ab. Dies wird im Zahlenbeispiel anhand des Auslesens derjenigen Fernsehzeile, die der Horizontalzeile M5 im Adreßspeicher 71 entspricht, verdeutlicht:

Aus dem Startadressenspeicher 72 wird aus der Speicherzeile M5 der Wert 3 als Startadresse für den (durchgezogen gezeichneten) Horizontalspeicher 61 ausgelesen. Dies bewirkt, daß die Datenübertragung aus dem Bildspeicher 60 in den Horizontalspeicher 61 so vorgenommen wird, daß die erste, als Kreuz angedeutete Bildinformation auf den Speicherplatz mit der Adresse 3 (also nicht auf den mit der Adresse 1) des Horizontalspeichers 61 geschrieben wird. Die beiden ersten Pixel des Horizontalspeichers 61 werden schwarz gesetzt, was jeweils durch einen Leerraum angedeutet ist. Damit wird dem linken schraffierten Randbereich neben dem Bildbereich b (s. Figur 1D) Rechnung getragen.

Es wird angenommen, daß aufgrund der Rechnung nach Schritt a) ermittelt wurde, daß für die besagte Fernsehzeile (entsprechend M5) insgesamt w = 6 Pixel ausgelesen werden sollen.

Die Einheiten 76, 77 (vgl. Figur 4) adressieren während der Dauer des Auslesens der gesamten besagten Fernsehzeile im Adreßspeicher 71 die Zeile M5. Die Spaltenadressen des Adreßspeichers 71 werden dabei von S1 bis S10 sequentiell angesteuert.

In der Zeile MS des Adreßspeichers 71 ist im gezeigten Beispiel folgende Information abgespeichert:

$$7 * 6 * 5 5 * 6 * 7 \qquad (1)$$

Obige Zeile (1) bedeutet, daß aus dem Bildspeicher 60 die Pixel mit den Adressen S1/7, S3/6, S5/5, S6/5, S8/6, S10/7 ausgelesen und fortlaufend, d. h. ohne Zwischenraum, in den Horizontalspeicher 61 eingeschrieben werden. Dabei wird das Pixel der Adresse S1/7 des Bildspeichers 60, das durch ein Kreuz symbolisiert ist, auf die Adresse S3 im Horizontalspeicher 61 übertragen. Entsprechend wird das Pixel mit der Adresse S3/6 des Bildspeichers 60, das durch einen Kreis symbolisiert ist, auf die Adresse S4 des Horizontalspeichers 61 übertragen. Entsprechendes gilt für die folgenden Pixel, die durch ein Viereck, Dreieck, einen Punkt und Stern gekennzeichnet sind. Sie werden also auf die Adressen S5 bis S8 des Horizontalspeichers 61 übertragen. Pixel im Bildspeicher 60, denen im Adreßspeicher 71 kein Wert zugeordnet ist (oder die speziell als solche gekennzeichnet sind) und die in der obigen Zeile mit * bezeichnet sind, werden nicht übertragen. Diese sind im Adreßspeicher 71 von Figur 5 durch einen freien Raum ausgewiesen. Hierdurch wird die für den Sektor-Scan erforderliche Datenreduktion bewirkt.

Im angeführten Beispiel der Zeile M5 sind also nun die w = 6 als Fernsehzeile darzustellenden Informationen in den Horizontalspeicher übertragen. Es ist ersichtlich, daß die Fernsehzeile aus dem Bildspeicher 60 entlang einer gebogenen Linie $Z_j$ ausgelesen wurde.

Alle Pixel im Horizontalspeicher 61 nach dem letzten Informationspixel (symbolisiert durch den erwähnten Stern) werden wieder, wie die Anfangspixel, schwarz gesetzt. Dies sind die Pixel mit den Adressen S9 und S10 des Horizontalspeichers 61. Diese Schwarzpixel repräsentieren in Figur 1D den rechts vom Sektor gelegenen schraffierten Bereich (oberhalb von D2). Im Beispiel sind weiterhin die letzten beiden Pixel mit den Adressen S11, S12 des Horizontalspeichers 61 nicht aktiv. Sie werden nur benötigt, wenn ein Scan mit höherer Anzahl an Vektoren als 10 geschrieben werden würde.

Beim Sektor-Scan werden beim Auslesen aus dem Bildspeicher 60 auch noch weitere Schwarzpixel ausgegeben. Sie entsprechen den Bereichen D1 und D2 in Figur 1D. Dies ist beispielsweise aus der Zeile M10 in Figur 5 ersichtlich. Hierzu dient der bereits erwähnte virtuelle Bildspeicher 62. Der Auslesevorgang des Adreßspeichers 71 wird auch hier wieder durch die Einheiten 76, 77 (vgl. Figur 4) bewerkstelligt. Mit dem Wert 14 aus dem Speicherplatz S1/M10 des Adreßspeichers 71 wird ein Pixel in dem virtuellen Speicher 62, also ein fiktiver Speicherplatz adressiert. Dies heißt bei der Ausgabe, daß in den Horizontalspeicher 61 ein Schwarzpixel eingeschrieben wird. Erst bei dem nächsten Wert 12 aus dem Speicherplatz S2/M10 wird ein Helligkeitswert erhalten. Denn dieser Wert 12 adressiert nicht mehr, wie die Werte größer als 12, den virtuellen Speicher 62, sondern den realen Bildspeicher 60. Damit ist den Randbereichen D1, D2 seitlich unterhalb des Sektors (siehe Figur 1D) Rechnung getragen. Das Auslesen der Zeile $Z_i$ (vgl. Figur 1C) ist in Figur 5 gestrichelt angedeutet. Die unterschiedlichen Pixel sind hier einheitlich durch umkreiste Kreuze gekennzeichnet.

Das Auslesen der einzelnen Zeilen M1 - M12 des Adreßspeichers 71 erfolgt nach Richtung und Geschwindigkeit gemäß dem fortschreitenden Rasterscan des Fernsehmonitors. Der Rasterscan ist somit quasi im Auslesevorgang des Adreßspeichers 71 "abgebildet". Durch die Umkodierung des Auslesevorgangs (d. h. erst Adressierung des Adreßspeichers von der Rastersteuerng des Fernsehscans, dann Adressierung des Bildspeichers 60 durch den gefundenen Inhalt des Adreßspeichers 71) erfolgt auch das Auslesen des Bildspeichers 60 auf den Horizontalspeicher 61 und von dort auf den Monitor 65 bei gegebener Scan-Art mit konstanter Frequenz.

Der als einzelne Bildvektoren parallel zwischengespeicherte Sektorinhalt wird durch den beschriebenen Vorgang geometrisch richtig dargestellt. In gleicher Weise läßt sich durch Vorgabe entsprechender Auslesevorschriften eine andere Scan-Art, beispielsweise ein Trapez-Scan, zwischenspeichern und geometrisch richtig als Trapez darstellen.

Für eine praktische Realisierung bei einem Sektorscanner hat der Bildspeicher 60 eine Matrix der Größe p x q = 512 x 512 mit einer Tiefe von 8 bit. Es können damit maximal 512 Vektoren mit je 512 Abtastpunkten oder Pixeln abgespeichert werden, und die Amplitudenauflösung beträgt 8 bit. Der Adreßraum des benötigten Speichers 60, 62 ist vom Halbsektorwinkel $\alpha$ abhängig und beträgt hier (512 x 1/cos $\alpha$) x 512 bit, wobei der Adreßbereich oberhalb 512 den virtuellen Speicher 62 darstellt. Es gilt dabei $0° \leq \alpha \leq +$

45°. Für Halbsektorwinkel $\alpha > 45°$ ergeben sich Werte nach einer ähnlichen Vorschrift (mit 1/sin $\alpha$), jedoch wird das Berechnungsverfahren für Schritt c) komplizierter; der Auslesevorgang läuft aber auch dann nach dem oben beschriebenen Muster ab.

Die Zeilen des Bildspeichers 60 werden also vorliegend mit dem Inhalt des Adreßspeichers 71 adressiert. Die Spaltenadresse S1 bis S12 ist beim Adreßspeicher 71 und Bildspeicher 60, 62 identisch und kann linear durchgezählt werden. Die (nicht schraffierte) aktive Größe des Bildspeichers 60 ist dabei von der jeweiligen Scanart abhängig, also von der Anzahl der akquirierten Vektoren $V_1 ... V_n$ pro Scan, sowie von der Anzahl der pro Scan abgetasteten Pixel (Abtastpunkte).

In der praktischen Realisierung hat der Adreßspeicher 71 eine Matrix ebenfalls mit der Größe $p \times q = 512 \times 512$, jedoch mit einer Tiefe von 10 bit. Dabei stellen 9 bit die Adresse für den Speicher 60, 62 dar; das 10. bit ist ein sogenanntes Entscheidungsbit, von dem abhängt, ob das adressierte Pixel zur Darstellung gelangt. Mit dieser Struktur können bei der Rekonstruktion der Scangeometrie sowohl die Pixel außerhalb des Sektorwinkels als auch im virtuellen Speicherbereich erfaßt werden.

Bei einer Alternative ist die Tiefe des Adreßspeichers z. B. nur 9 bit; die Entscheidung über die Pixeldarstellung oder -unterdrückung wird über den Inhalt des Adreßspeichers 71 kodiert. Beispielsweise kann eine in den Adreßspeicher 71 eingeschriebene Null Datenreduktion bedeuten.

Der Startadressenspeicher 72 besteht in der genannten praktischen Realisierung aus einer 512 x 1 Matrix mit einer Tiefe von 8 bit. Er beinhaltet die Startadresse des Horizontalspeichers 61, in die das erste Pixel jeder Fernsehzeile (entsprechend Auslesezeile $Z_1$ bis $Z_k$ des Bildspeichers 60) bei der Datenübertragung aus dem Bildspeicher 60 geschrieben wird. Die Adresse des Horizontalspeichers 61 wird nach jeder Datenübertragung aus dem Speicher 60, 62 um 1 erhöht, sofern nicht ein Pixel aus dem Bildspeicher 60 unterdrückt wird. Bei dieser Methode sind die in den Horizontalspeicher 61 eingeschriebenen Daten dicht gepackt.

Der Horizontalspeicher 61 hat in der erwähnten praktischen Realisierung eine Matrix 1 x 512 mit einer Tiefe von 8 bit. Die aktive Länge des Horizontalspeichers 61 ist identisch mit der aktiven horizontalen Dimension des Bildspeichers 60 und damit abhängig von der Anzahl der Bildvektoren $V_1$ bis $V_n$. Die Wiedergabe der richtigen geometrischen Länge der im Horizontalspeicher 61 gespeicherten Zeile auf dem Monitor 65 wird durch geeignete Wahl der Auslesefrequenz des Horizontalspeichers 61 für jede Scanart gewährleistet. Dabei wird jeweils nach dem Auslesen der Horizontalspeicher 61 gelöscht, d. h. mit Schwarzinformation aufgefüllt.

Im Normalfall wird bei der Darstellung eines Bildausschnittes aus den gespeicherten Bilddaten die relative Auflösung verringert. Wird nun die Bildspeichermatrix geeignet größer als 512 x 512 gewählt, so ergibt sich die Möglichkeit, für die Ausschnittsdarstellung die gleiche laterale und axiale Auflösung wie beim Normalformat zu erzielen.

Ein Vorteil des beschriebenen Speicherverfahrens besteht darin, daß sämtliche Vektoren $V_1 ... V_n$ mit der vollständigen Originalinformation im Bildspeicher 60 abgespeichert werden. Dadurch ist es möglich, eine effiziente Bildnachverarbeitung durchzuführen. Ein wesentlicher Vorteil besteht auch darin, daß die Umstellung auf eine andere Scan-Art nur die Auswahl einer anderen Software zur Erzeugung der Tabelle o. dgl. erfordert.

Es hat sich gezeigt, daß mit dem beschriebenen Verfahren und der zugehörigen Vorrichtung eine praxisgerechte Möglichkeit für die Videodarstellung eines Sektorscans gegeben ist. Andererseits ist aber das beschriebene Verfahren nicht auf das herkömmliche Sektorformat beschränkt; es sind damit auch beliebige andere Bildgeometrien darstellbar.

## Patentansprüche

1. Verfahren zur Umwandlung von mit einem Ultraschallscanner, wie z. B. einem Sektorscanner, erhaltenen Ultraschall-Echosignalen in Bildsignale, bei dem jeweils entlang einer jeden Abtastrichtung der von dem verwendeten Scanner erzeugten Scanform eine Vielzahl von Ultraschall-Echowerten erfaßt und als Bildvektor ($V_1$ bis $V_n$) in voller Länge in jeweils einer Spalte eines Bildspeichers (60) mit orthogonaler Speichermatrix zwischengespeichert wird, und bei dem die in den Bildspeicher (60) eingeschriebenen Bildvektoren ($V_1$ bis $V_n$) zur geometrisch der Scanform entsprechenden, fernsehnormgerechten Darstellung auf einem Monitor (65) mit Hilfe einer entweder in einem Speicher (71) enthaltenen oder von einer Recheneinrichtung (102) erzeugten und in einem Speicher (71) abgelegten darstellungsspezifischen Tabelle in Bildsignale umgewandelt werden, durch welche die geometrische Form des Ultraschall-Scans unverzerrt auf dem Monitor (65) rekonstruiert wird, für die Anwendung auf nach Artikel 52(4) EPÜ vom Patentschutz nicht ausgeschlossene Gebiete, dadurch gekennzeichnet, daß die im Speicher (71) enthaltenen Tabellenwerte als Leseadressen für die Speicherplätze des Bildspeichers (60) verwendet werden, daß der nachfolgend als Adreßspeicher bezeichnete Speicher (71) synchron mit der zeilenweisen Abtastung des Monitors (65) linear ausgelesen wird, und daß die Adressen im Adreßspeicher (71) in einer solchen Reihenfolge zeilenweise abgelegt werden, daß bei der linearen, mit der Abtastung des Monitors (65) synchronisierten Adressierung des Adreßspeichers (71) von den aus dem Adreßspeicher (71) ausgelesenen Tabellenwerten die im Bildspeicher (60) enthaltenen Echowerte in einer für die unverzerrte Darstellung der Scanform erforderlichen Reihenfolge ausgelesen und dabei in die fernsehnormgerechten Bildsignale umgewandelt werden.

2. Verfahren nach Anspruch 1, dadurch gekennzeichnet, daß die Tabelle nach erfolgter Wahl der gewünschten Scanform nur einmal erzeugt und für alle Ultraschall-Scans der gewählten Scanform im Adreßspeicher (71) gespeichert wird.

3. Verfahren nach Anspruch 1 oder 2, dadurch gekennzeichnet, daß die Spaltenadressen (S1 bis S12) des Bildspeichers (60) mittels einer Spaltenadressier - Einheit (76) linear fortgeschaltet werden, und daß die Zeilenadressen (R1 bis R17) des Bildspeichers (60) aus der im Adreßspeicher (71) abgespeicherten Tabelle entnommen werden, wobei die Speicherinhalte des Adreßspeichers (71) als Zeilenadressen (R1 bis R17) benutzt werden.

4. Verfahren nach Anspruch 1 oder 2, dadurch gekennzeichnet, daß die Spalten- und Zeilenadressen des Bildspeichers (60) aus der Tabelle entnommen und als Adressen für den Zugriff auf Speicherplätze des Bildspeichers (60) verwendet werden.

5. Verfahren nach einem der Ansprüche 1 bis 4, dadurch gekennzeichnet, daß für das Auslesen der Speicherplätze des Bildspeichers (60) ein in einer Einheit (101) enthaltenes Unterprogramm aktiviert wird, welches die Recheneinheit (102) zur Erzeugung der darstellungsspezifischen Tabelle befähigt, wobei letztere in dem Adreßspeicher (71) abgelegt wird.

6. Verfahren nach einem der Ansprüche 1 bis 5, dadurch gekennzeichnet, daß der Adreßspeicher (71) während des Einlesens der Tabellenwerte mit Hilfe zumindest eines Zählers (72, 73) adressiert wird.

7. Verfahren nach Anspruch 1, dadurch gekennzeichnet, daß die Bildvektoren ($V_1$ bis $V_n$) vor dem Einschreiben in den Bildspeicher (60) in einem Vektorspeicher (50) zwischengespeichert werden.

8. Verfahren nach Anspruch 1, dadurch gekennzeichnet, daß die einzelnen Bildvektoren abwechselnd in einen von zwei kompletten Bildspeichern eingeschrieben werden, die im Wechselpufferbetrieb arbeiten.

9. Vorrichtung zur Durchführung des Verfahrens nach einem der Ansprüche 1 bis 8, mit einem Ultraschall-Sende- und Empfangs-System zur Durchführung eines Ultraschall-Scans, wie z. B. eines Sektorscans, mit einem aus in Zeilen und Spalten angeordneten Speicherzellen in Form einer orthogonalen Speichermatrix aufgebauten Bildspeicher (60) zur Zwischenspeicherung von Bildvektoren ($V_1$ bis $V_n$), die jeweils aus den entlang einer Abtastrichtung erhaltenen Abtastwerten der empfangenen Ultraschall-Echosignale gebildet sind, mit einem Speicher (71), in dem eine für die fernsehnormgerechte Darstellung der verwendeten Scanform spezifische Tabelle abgelegt ist, mit einem Monitor (65) zur unverzerrten Darstellung des Ultraschallscans anhand von dem Monitor (65) zugeführten, fernsehnormgerechten Bildsignalen, die durch Umwandlung der im Bildspeicher (60) abgelegten Bildvektoren ($V_1$ bis $V_n$) mit Hilfe der Tabellenwerte erzeugt werden, und mit einer Steuereinrichtung (76, 77) zur Steuerung des Auslesens des Bildspeichers (60) und des Speichers (71), dadurch gekennzeichnet, daß der Speicher ein dem Bildspeicher (60) zugeordneter Adreßspeicher (71) ist, der die gleiche Speichermatrixgröße wie der Bildspeicher (60) besitzt und als Tabellenwerte den Speicherplätzen des Bildspeichers (60) zugeordnete Adressen enthält, die im Adreßspeicher (71) in einer solchen Reihenfolge zeilenweise abgelegt sind, daß durch eine von der Steuereinrichtung bewirkte lineare und mit der Abtastung des Monitors (65) synchronisierte Adressierung des Adreßspeichers (71) von den aus dem Adreßspeicher (71) ausgelesenen Tabellenwerten die im Bildspeicher (60) enthaltenen Abtastwerte in einer für die unverzerrte Darstellung der Scanform erforderlichen Reihenfolge ausgelesen und dabei in die fernsehnormgerechten Bildsignale umgewandelt werden.

10. Vorrichtung nach Anspruch 9, dadurch gekennzeichnet, daß dem Adreßspeicher (71) eine Adreßrecheneinheit (102) zugeordnet ist.

11. Vorrichtung nach Anspruch 10, dadurch gekennzeichnet, daß der Adreßspeicher (71) eine PROM- oder ROM- oder RAM-Bank ist, die mit Informationen verschiedener Scanformen programmierbar ist.

12. Vorrichtung nach Anspruch 9, 10 oder 11, dadurch gekennzeichnet, daß zur Erzeugung der darstellungsspezifischen Tabelle im Adreßspeicher (71) dieser Adreßspeicher (71) mit einem externen oder internen Prozessor verbunden ist.

13. Vorrichtung nach Anspruch 9, dadurch gekennzeichnet, daß dem Bildspeicher (60) ein Vektorspeicher (50) vorgeschaltet ist, der im Wechselpufferbetrieb arbeitet.

14. Vorrichtung nach Anspruch 9, dadurch gekennkennzeichnet, daß dem Bildspeicher (60) ein Horizontalspeicher (61) nachgeschaltet ist, der als Videozeilenspeicher dient und der im Wechselpufferbetrieb arbeitet.

15. Vorrichtung nach einem der Ansprüche 9 bis 14, dadurch gekennzeichnet, daß zur Umstellung von einer Scanform auf die andere ein Einstellorgan (100) vorgesehen ist, und daß das Einstellorgan (100) mit einer Vorrichtung (101, 102) zur Änderung der darstellungsspezifischen Tabelle verbunden ist.

## Claims

1. A method for converting ultrasonic echo signals obtained by means of an ultrasonic scanner, for example a sector scanner, into image signals, in which a plurality of ultrasonic echo values are detected along each direction of scanning of the scan form produced by the scanner used and are temporarily stored in each case as an image vector ($V_1$ to $V_n$) in full length in one column of an image store (60) having an orthogonal storage matrix, and in which the image vectors ($V_1$ to $V_n$) entered into the image store (60) are converted into image signals for the television-standard display geometrically corresponding to the scan form on a monitor (65), by means of a display-specific table which is either contained in a store (71) or produced by a computer (102) and stored in a store (71), by means of which image signals the geometrical form of the ultrasonic scan is reproduced undistorted on the monitor (65), for application in fields not excluded according to Article 52(4) EPC, characterised in that the table values contained in the store (71) are used as reading addresses for the storage locations of the image store (60), the store (71) referred to in the following as an address store is read linearly synchronously with the line scanning of the monitor (65), and the addresses in the address store (71) are stored in rows in such an order that during the linear addressing of the address store (71), which is synchronised with the scanning of the monitor (65), by the table values read from the address store (71), the echo values contained in the image store (60) are read out in an order necessary for the undistorted display of the scan form and are thereby converted into the television-standard image signals.

2. A method according to claim 1, characterised in that, after the desired scan form has been selected, the table is only produced once and is stored in the address store (71) for all ultrasonic scans of the selected scan form.

3. A method according to claim 1 or 2, characterised in that the column addresses (S1 to S12) of the image store (60) are incremented linearly by means of a column addressing unit (76), and the row addresses (R1 to R17) of the image store (60) are taken from the table stored in the address store (71), the store contents of the address store (71) being used as row addresses (R1 to R17).

4. A method according to claim 1 or 2, characterised in that the column and row addresses of the image store (60) are taken from the table and used as addresses for access to storage locations of the image store (60).

5. A method according to any one of claims 1 to 4, characterised in that for reading the storage locations of the image store (60), a subroutine contained in a unit (101) is activated, which enables the computer (102) to produce the display-specific table, the latter being stored in the address store (71).

6. A method according to any one of claims 1 to 5, characterised in that the address store (71) is addressed during the reading-in of the table values by means of at least one counter (72, 73).

7. A method according to claim 1, characterised in that the image vectors ($V_1$ to $V_n$) are temporarily stored in a vector store (50) before being entered into the image store (60).

8. A method according to claim 1, characterised in that the individual image vectors are alternately entered into one of two complete image stores, which operate in alternating buffer mode.

9. A device for carrying out the method according to any one of claims 1 to 8, having an ultrasonic transmitting and receiving system for performing an electronic scan, for example a sector scan, comprising an image store (60), which is constructed in the form of an orthogonal storage matrix and which comprises storage locations arranged in rows and columns, for the intermediate storage of image vectors ($V_1$ to $V_n$), which are formed in each case from the scanning values of the ultrasonic echo signals obtained along one direction of scanning, a store (71), in which a table is stored which is specific to the television-standard display of the scan form used, a monitor (65) for the undistorted display of the ultrasonic scan with the aid of television-standard image signals which are supplied to the monitor (65) and which are produced using the table values by converting the image vectors ($V_1$ to $V_n$) stored in the image store (60), and comprising a control device (76, 77) for controlling the reading of the image store (60) and the store (71), characterised in that the store is an address store (71) which is associated with the image store (60), which has the same storage matrix size as the image store (60) and which receives addresses as table values, which addresses are associated with the storage locations of the image store (60) and which are stored in the address store (71) in rows in such an order that by means of a linear addressing of the address store (71), which is effected by the control device and which is sychronised with the scanning of the monitor (65), by the table values read from the address store (71), the scanning values contained in the image store (60) are read out in an order necessary for the undistorted display of the scan form and are thereby converted into the television-standard image signals.

10. A device according to claim 9, characterised in that an address computer (102) is associated with the address store (71).

11. A device according to claim 10, characterised in that the address store (71) is a PROM- or ROM- or RAM-bank, which can be programmed with data of different scan forms.

12. A device according to claim 9, 10 or 11, characterised in that for producing the display-specific table in the address store (71), said address store (71) is connected to an external or internal processor.

13. A device according to claim 9, characterised in that a vector store (50), which operates in alternating buffer mode, is connected before the image store (60).

14. A device according to claim 9, characterised in that a horizontal store (61), which acts as a video row store and operates in alternating buffer mode, is connected after the image store (60).

15. A device according to any one of claims 9 to 14, characterised in that an adjusting device (100) is provided for changing over from one scan form to the other, and the adjusting device (100) is connected to a device (101, 102) for changing the display-specific table.

**Revendications**

1. Procédé pour convertir des signaux d'échos ultrasonores obtenus au moyen d'un scanner à ultrasons, comme par exemple un scanner à balayage vectoriel, en des signaux d'image, et selon lequel une multiplicité de valeurs d'échos ultrasonores sont détectées respectivement le long de chaque direction d'exploration de la forme de balayage produite par le scanner utilisé et sont mémorisées temporairement sous la forme de vecteurs d'image ($V_1$ à $V_n$), avec leur longueur complète, dans des colonnes respectives d'une mémoire d'images (60) comportant une matrice de mémoire orthogonale, et selon lequel les vecteurs d'image ($V_1$ à $V_n$) enregistrés dans la mémoire d'images (60) sont convertis, en vue de leur représentation conforme à la norme de télévision et correspondant du point de vue géométrique à la forme de balayage, sur un moniteur (65), et ce à l'aide d'un tableau spécifique à la représentation, contenu dans une mémoire (71) ou produit par un dispositif de calcul (102) et enregistré dans une mémoire (71), en des signaux d'image, à l'aide desquels la forme géométrique du balayage ultrasonore est reconstituée sans distorsion sur le moniteur (65), pour une application dans des domaines non exclus d'une protection conférée par un brevet, conformément à l'article 52(4) CBE, caractérisé par le fait que les valeurs du tableau, contenues dans la mémoire (71) sont utilisées en tant qu'adresses de lecture pour les cases de la mémoire d'images (60), que la mémoire (71) désignée ci-après sous le terme de mémoire d'adresses est lue linéairement et en synchronisme avec le balayage ligne par ligne du moniteur (65) et que les adresses situées dans la mémoire d'adresses (71) sont mémorisées ligne par ligne selon une séquence telle que, dans le cas de l'adressage linéaire de la mémoire d'adresses (71), synchronisé avec le balayage du moniteur (65) et exécuté au moyen des valeurs du tableau lues à partir de la mémoire d'adresses (71), les valeurs d'échos contenues dans la mémoire d'images (60) sont lues selon une séquence nécessaire pour une représentation non déformée de la forme de balayage et sont converties en les signaux d'image conformes à la norme de télévision.

2. Procédé suivant la revendication 1, caractérisé par le fait que le tableau n'est produit qu'une seule fois après le choix de la forme de balayage désirée et est mémorisé dans la mémoire d'adresses (71) pour tous les balayages ultrasonores de la forme de balayage choisie.

3. Procédé suivant la revendication 1 ou 2, caractérisé par le fait que les adresses de colonnes (S1 à S12) de la mémoire d'images (60) sont avancées linéairement à l'aide d'une unité d'adressage de colonnes (76), et que les adresses de lignes (R1 à R17) de la mémoire d'images (60) sont prélevées du tableau mémorisé dans la mémoire d'adresses (71), les contenus de la mémoire d'adresses (71) étant utilisés comme adresses de lignes (R1 à R17).

4. Procédé suivant la revendication 1 ou 2, caractérisé par le fait que les adresses de colonnes et les adresses de lignes de la mémoire d'images (60) sont tirées du tableau et sont utilisées en tant qu'adresses pour l'acces aux cases de la mémoire d'images (60).

5. Procédé suivant l'une des revendications 1 à 4, caractérisé par le fait qu'un sous-programme, qui est contenu dans une unité (101) et active l'unité de calcul (102) pour la production du tableau spécifique à la représentation, qui est mémorisé dans la mémoire d'adresses (71), est activé pour la lecture des cases de la mémoire d'images (60).

6. Procédé suivant l'une des revendications 1 à 5, caractérisé par le fait que la mémoire d'adresses (71) est adressée à l'aide d'au moins un compteur (72, 73) pendant l'enregistrement des valeurs du tableau.

7. Procédé suivant la revendication 1, caractérisé par le fait que les vecteurs d'image ($V_1$ à $V_n$) sont mémorisés temporairement dans une mémoire de vecteurs (50), avant leur enregistrement dans la mémoire d'images (60).

8. Procédé suivant la revendication 1, caractérisé par le fait que les différents vecteurs d'images sont enregistrés en alternance dans l'une de deux mémoires complètes d'images, qui opèrent selon un fonctionnement avec tamponnage alternatif.

9. Dispositif pour la mise en oeuvre du procédé suivant l'une des revendications 1 à 8, comportant un système d'émission et de réception d'ultrasons pour l'exécution d'un balayage ultrasonore, comme par exemple d'un balayage sectoriel, comportant une mémoire d'images (60) constituée par des cases de mémoire disposées suivant des lignes et des colonnes et réalisée sous la forme d'une matrice orthogonale de mémoire, et servant à mémoriser temporairement des vecteurs d'images ($V_1$ à $V_n$), qui sont formés respectivement à partir des valeurs d'exploration, obtenues le long d'une direction d'exploration, des signaux d'échos ultrasonores reçus, une mémoire (71), dans laquelle est mémorisé un tableau spécifique pour la représentation, conforme à une norme de télévision, de la forme de balayage utilisé, un moniteur (65) servant à représenter sans déformation le balayage ultrasonore sur la base de signaux d'image qui sont envoyés à ce moniteur, sont conformes à la norme de télévision et sont produits par conversion des vecteurs d'image ($V_1$ à $V_n$) mémorisés dans la mémoire d'images (60), à l'aide des valeurs du tableau, et un dispositif de commande (76, 77) servant à commander la lecture de la mémoire d'images (60) et de la mémoire (71), caractérisé par le fait que la mémoire est une mémoire d'adresses (71), qui est associée à la mémoire d'images (60), possède une matrice de mémoire de même taille que celle de la mémoire d'images (60) et contient, en tant que valeurs du tableau, des adresses qui sont associées aux cases de la mémoire d'images (60) et sont mémorisées ligne par ligne dans la mémoire d'adresses (71) selon une séquence telle que les valeurs d'exploration contenues dans la mémoire d'images (60) sont lues selon une séquence nécessaire pour la représentation non déformée de la forme de balayage et sont converties en les signaux d'image conformes à la norme de télévision, grâce à un adressage linéaire de la mémoire d'adresses (71), déclenché par le dispositif de commande et synchronisé par le balayage du moniteur (65) et effectué avec les valeurs du tableau lues à partir de la mémoire d'adresses (71).

10. Dispositif suivant la revendication 9, caractérisé par le fait qu'une unité (102) de calcul d'adresses est associée à la mémoire d'adresses (71).

11. Dispositif suivant la revendication 10, caractérisé par le fait que la mémoire d'adresses (71) est formée par une unité de mémoire PROM ou ROM ou RAM, qui est programmable avec des informations de différentes formes de balayage.

12. Dispositif suivant la revendication 9, 10 ou 11, caractérisé par le fait que pour la production du tableau, spécifique pour la représentation, dans la mémoire d'adresses (71), cette dernière est reliée à un processeur externe ou interne.

13. Dispositif suivant la revendication 9, caractérisé par le fait qu'une mémoire de vecteurs (50), qui opère selon un fonctionnement de tamponnage alterné, est branchée en amont de la mémoire d'images (60).

14. Dispositif suivant la revendication 9, caractérisé par le fait qu'en aval de la mémoire d'images (60) se trouve branchée une mémoire horizontale (61) qui est utilisée en tant que mémoire de lignes vidéo et opère selon le fonctionnement de tamponnage alterné.

15. Dispositif suivant l'une des revendications 9 à 14, caractérisé par le fait que pour la commutation d'une forme de balayage sur l'autre, il est prévu un organe de réglage (100) et que cet organe de réglage (100) est relié à un dispositif (101, 102) servant à modifier le tableau spécifique pour la représentation.

Einschreiben

Auslesen

FIG 1

FIG 2

FIG 3

FIG 4

FIG 5

p

Anzahl w des auszulesenden Pixel

p

EP 0 121 766 B1

| | 72 | | S1 | S2 | S3 | S4 | S5 | S6 | S7 | S8 | S9 | S10 | S11 | S12 |
|---|---|---|---|---|---|---|---|---|---|---|---|---|---|---|
| M1 | 5 | M1 | | | | | 1 | | | | | | | |
| M2 | 5 | M2 | 3 | | | | 2 | | | | 3 | | | |
| M3 | 4 | M3 | 4 | | | 3 | | | 3 | | 4 | | | |
| M4 | 3 | M4 | 6 | 4 | | | 4 | | 4 | | 6 | | | |
| M5 | (3) | M5 | 7 | 6 | | 5 | 5 | | 6 | | 7 | | | |
| M6 | 2 | M6 | 8 | 7 | | 6 | 6 | 6 | 6 | | 7 | 8 | | |
| M7 | 2 | M7 | 10 | 9 | 8 | 7 | | 7 | 7 | 8 | 9 | 10 | | |
| M8 | 1 | M8 | 11 | 10 | 9 | 8 | 8 | 8 | 8 | 9 | 10 | 11 | | |
| M9 | 1 | M9 | 13 | 11 | 10 | 9 | 9 | 9 | 9 | 10 | 11 | 13 | | |
| M10 | (1) | M10 | 14 | 12 | 11 | 10 | 10 | 10 | 10 | 11 | 12 | 14 | | |
| M11 | 1 | M11 | 16 | 13 | 12 | 11 | 11 | 11 | 11 | 12 | 13 | 16 | | |
| M12 | 1 | M12 | 17 | 15 | 13 | 12 | 12 | 12 | 12 | 13 | 15 | 17 | | |

71

nicht aktiv

| Anzahl w des auszulesenden Pixel |
|---|
| 1 |
| 3 |
| 4 |
| 5 |
| 6 |
| 8 |
| 9 |
| 10 |
| 10 |
| 10 |
| 10 |
| 10 |
| 10 |

$v_1$ $v_2$ $v_3$ $v_4$ ··· $v_n(=v_{10})$

S1 S2 S3 S4 S5 S6 S7 S8 S9 S10 S11 S12

nicht aktiv

R1
R2
R3
R4
R5
R6
R7
R8
R9
R10
R11
R12
R13
R14
R15
R16
R17

60

q

62

65

× ○ □ △ ● ＊

S1 S2 S3 S4 S5 S6 S7 S8 S9 S10 S11 S12

61

65

⊗ ⊗ ⊗ ⊗ ⊗ ⊗ ⊗ ⊗ ⊗ ⊗

S1 S2 S3 S4 S5 S6 S7 S8 S9 S10 S11 S12

61